# EUROPEAN PATENT APPLICATION

(11) **EP 1 429 444 A1**
(43) Date of publication of application: **16.06.2004**
(21) Application number: 03257232.3
(22) Date of filing: 17.11.2003
(51) Int. Cl.: H02K 7/18, H02K 35/02

(54) **Vibration operated generator**

(30) Priority: 28.11.2002 JP 2002345267
(71) Applicant: MN Engineering Co., Ltd., Ube-shi, Yamaguchi (JP)
(72) Inventor: Nakano, Kimihiko, Yamaguchi Japan (JP); Matsunaga, Masahiro, Yamaguchi Japan (JP)
(74) Representative: Jenkins, Peter David

(57) **Abstract**

The present invention relates to a structure of a vibration operated generator which makes it possible to generate electricity by using vibration or swinging to cause electromagnetic induction. The present invention comprises a combination of a guide with a concave surface including a non-magnetic material, a permanent magnet being placed on the concave surface of the guide such that the magnet freely rolls over this concave surface, and electromagnetic induction coils being disposed in positions that cut across the magnetic flux generated by the permanent magnet.

## Description

The present invention relates to a vibration operated generator, and more specifically relates to a structure of a generator which can generate electricity by vibration or swinging motion when a holder walks or rides a vehicle such as an automobile or railroad car.

In recent years, the spread of portable electronic devices has been remarkable, and the popularization of portable communication devices has been especially notable. Chargeable compact batteries are usually used as power supplies in such portable electronic devices; however, one problem that arises is that frequent charging is necessary since the capacity of such batteries is limited. Although the need for charging also depends on the frequency of use, it is necessary in some cases to charge the batteries approximately once every 1 to 3 hours. Accordingly, there has been a demand for the development of portable charging devices that allow easy charging at any location.

Currently, however, all that has been developed is a system using a manually operated generator as disclosed in Japanese Patent Application Kokai No. 10-210673. In addition to requiring bothersome manual charging, this invention also suffers from an increase in the size of the device itself, so that portability is extremely difficult. In addition, the invention of Japanese Patent Application Kokai No. 10-313933 has also been disclosed; however, both of these conventional techniques are incomplete from the standpoint of practical use.

In light of such problems, the present inventor previously developed a so-called vibration operated generator that utilizes vibration generated during walking (Japanese Patent Application No. 2001-180966). However, this invention suffers from the following drawbacks: specifically, since a bar magnet is suspended by a spring, and the bar magnet is caused to vibrate upward and downward by the vibration of the spring, the device is heavy and there are limits to the compactness that can be achieved; furthermore, the electric power that is generated per unit weight is small.

Accordingly, the present invention was devised to resolve the problems in the prior art. The primary aim of the present invention is to provide a vibration operated generator with a novel structure which can periodically vary the magnetic flux of a permanent magnet without using a spring, and which is also thin, small, light and simple, has a high output, and can be used while charging.

Another aim of the present invention is to provide a high-output generator which uses the special features of thinness, lightweight, simplicity and high output so that a plurality of generators can be concentrated and mounted on a vehicle such as an automobile or railroad car, etc.

In accordance with the principles of the present invention, the aims are achieved by a vibration operated generator which is characterized by the fact that the generator comprises a combination of a guide that has a concave surface made of a non-magnetic material, a permanent magnet which is placed on the concave surface of the guide, and which freely rolls over the concave surface, and electromagnetic induction coils which are disposed in positions that cut across the magnetic flux of the permanent magnet.

Embodiments of the present invention will now be described by way of example only, with reference to the accompanying drawings, in which:-
Figure 1 is a diagram which illustrates the operation and functions of a typical structure of the present invention.
Figure 2 is a diagram which illustrates the operation and functions of another embodiment of the present invention.
Figure 3 is a diagram which illustrates the operation and functions of still another embodiment of the present invention.
Figure 4 is an explanatory diagram illustrating a configuration in which a plurality of generators are installed adjacent to each other above and below in cases where the electric power generated by a single generator is insufficient.
Figure 5 is an explanatory diagram illustrating a configuration in which generators are installed adjacent to each other on the left and right in cases where the electric power generated by a single generator is insufficient.
Figure 6 is an explanatory diagram of a structure in which the coil is magnetically separated, and the structure is surrounded by a continuous body comprising a material with a high magnetic permeability.
Figure 7 is an explanatory diagram of a structure in which the coil is magnetically separated, and the structure is surrounded by screening walls comprising a diamagnetic material.
Figure 8 is an explanatory diagram of a structure in which the coils are magnetically separated, and the structure is a combined structure of the structures shown in Figures 6 and 7.
Figure 9 is a diagram which illustrates the structure of a vehicle-mounted generator that is mounted on a vehicle such as an automobile, etc.
Figure 10 shows a configuration in which an elastic band-form body is used as the guide, and the permanent magnet is caused to undergo a larger displacement by causing the guide itself to vibrate.
Figure 11 shows a configuration in which a guide comprising an elastic band-form body is suspended from springs.
Figure 12 is an explanatory diagram of a structure in which an elastic band-form body is caused to vibrate by the motion of the wind, and electromagnetic induction is caused to occur by the rotation of a permanent magnet.
Figure 13 is an explanatory diagram of a vibration operated generator with a clock pendulum structure.
Figure 14 shows an embodiment of a structure in which the coil is caused to vibrate.
Figure 15 shows an embodiment of the winding structure of the coil of the present invention.
Figures 16 (A) and (B) show a diagram of embodiments of the guide of the present invention.
Figure 17 is an explanatory diagram of the direction of magnetization of the permanent magnet.
Figure 18 is an explanatory diagram of the structure of an embodiment of the present invention.
Figure 19 is an explanatory diagram of the structure of an embodiment of the present invention.
Figure 20 is an explanatory diagram of the generated voltage of an embodiment of the present invention.
Figure 21 is an explanatory diagram of the generated voltage of an embodiment of the present invention.
Figure 22 is a diagram which illustrate a card-type embodiment of the present invention.
Figure 23 is a diagram which illustrates a bar-type embodiment of the present invention.
Figure 24 is a diagram which illustrates another card-type embodiment of the present invention.
Figure 25 is diagram which illustrates another card-type embodiment of the present invention.
Figure 26 is a diagram which illustrates a coil structure of the card-type embodiment of the present invention.
Figures 27 (A)-(D) show a diagram which illustrates embodiments of the permanent magnet of the present invention.

The operation and functions of the present invention will be described with reference to the attached figures.

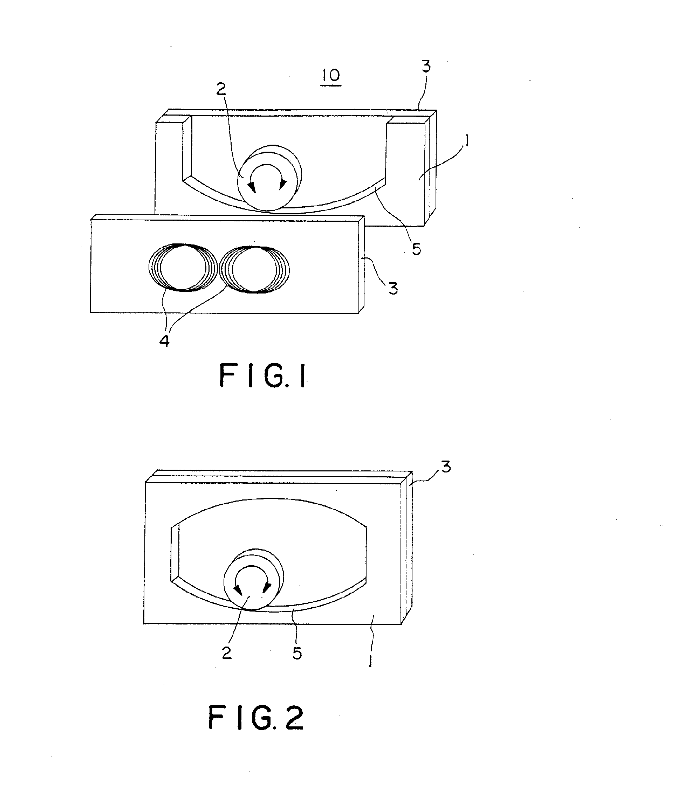

Fig. 1 is a diagram which illustrates the operation and functions of an embodiment of a generator 10 the present invention.

A guide 1 has a concave surface; this guide 1 comprises a non-magnetic material such as a synthetic resin or non-magnetic metal, etc. A permanent magnet 2 is made into a round shape resembling a wheel, and rolls freely to the left and right over the concave surface 5 in the manner of a roller.

If the curvature radius of the concave surface 5 is determined so that the rolling period of the magnet in the bottom part of the concave surface coincides with the walking period of a human being or the vibration period of a vehicle on which the device is mounted, the rolling speed and rolling distance of the permanent magnet can be maximized, so that the electromotive force induced in the coil 4 can be maximized.

In order to prevent the magnet from escaping to the outside form the concave surface 5 when the magnet 2 is rolling, it is effective to attach two side plates 3 so that the concave surface 5 is clamped between these side plates 3. In this case, the magnet 2 can be freely caused to move to the left and right through the space demarcated by the concave surface 5 and two side plates 3 by the swinging or vibration that is generated when a person carries the device, or the swinging or vibration of a vehicle or railroad.

Coils 4 used for electromagnetic induction are disposed on the outsides of the two side plates 3.

The coils 4 are disposed in positions that cut across the magnetic flux of the permanent magnet 2. In concrete terms, the coils 4 are positioned facing each other on the left and right with the permanent magnet 2 interposed. Alternatively, the coils are disposed so that these coils 4 are wound from the outside of the guide 1 and the permanent magnet 2. In short, any disposition which is such that the coils 4 are in positions that cut across the magnetic flux is sufficient.

In regard to the number of the coils 4, one or a plurality of coils may be disposed on one side only, or one coil 4 each may be disposed on the left and right of the magnet, so that a total of two coils are disposed. Alternatively, a plurality of coils 4 may be disposed on both the left and right of the magnet 2. Furthermore, a single continuous coil 4 may be wound from the outside of the guide 1 and the permanent magnet 2, or such a coil 4 may be split into a plurality of coils 4 at intermediate points and wound from the outside of the guide 1 and permanent magnet 2.

Since the voltage that is induced by electromagnetic induction is proportional to the number of turns of the coils 4, it is desirable that the coil windings be concentrated without gaps.

Since opposite electric currents are induced in coils disposed on the left and right with the side plates 3 interposed, and coils 4 that are adjacent to each other on the same side plates 3, the coils 4 are connected so that the electric currents do not cancel each other.

In cases where the vibration source of the present invention does not produce a constant vibration, i. e., in cases where it is impossible to obtain a constant vibration, as in the vibration that is generated when a human being is walking, or in cases where the device is mounted on a vehicle that is not in constant use, it is desirable that the electric power that is generated be used after a battery is charged with this electric power. Since an alternating current is induced in the coils 4, a rectifier is connected to the final terminals of the coils 4 so that the current is converted into a direct current, and the direct current obtained by this conversion is used to charge a battery after the voltage is stepped up by a regulator.

In order to increase the generated voltage, it is desirable to make a series connection after the current is converted into a direct current and the polarity is matched.

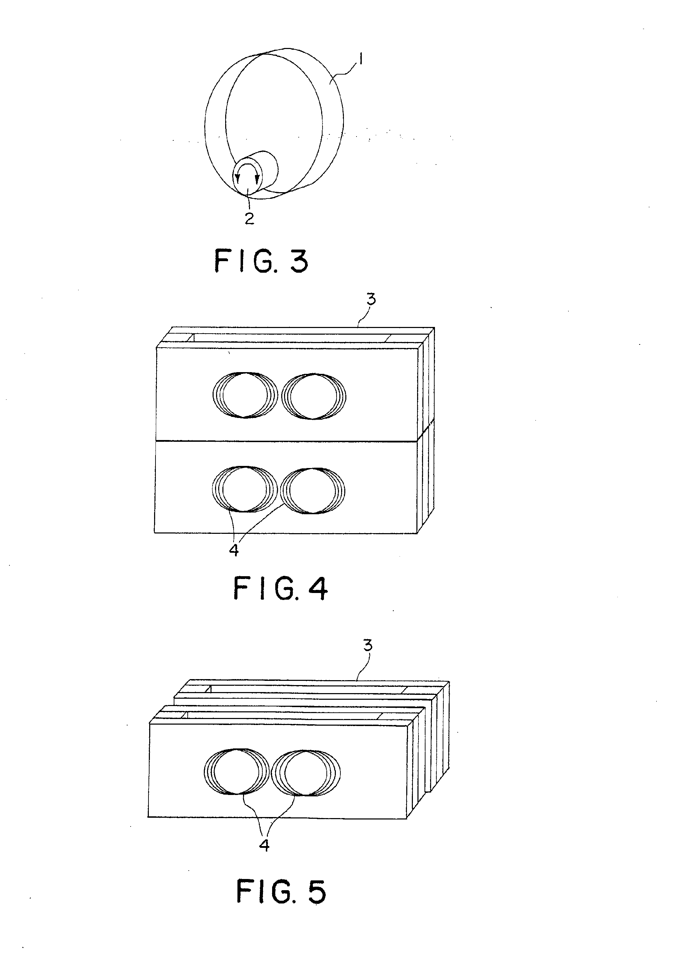

The guide 1 with a concave surface 5 shown in Fig. 1 has a half-split structure; however, the guide with a concave surface 5 may also have a continuous curved surface 5 with an elliptical shape formed by joining and two half-split structures together as shown in Fig. 2. Alternatively, a continuous curved surface with a ring-form inside surface may be used as a guide 1 as shown in Fig. 3. In the case of the structure shown in Fig. 1, the magnet will fall out of the guide 1 if the generator is turned over. In the case of Figs. 2 and 3, on the other hand, the structures are characterized by the fact that the generator 10 will operate even if turned over. In particular, in the case of the structure shown in Fig. 3, the permanent magnet 2 can rotate and generate electricity in any position.

Figs. 4 and 5 are explanatory diagrams illustrating configurations in which a plurality of generators 10 are installed side by side in the vertical or left-right direction in cases where the amount of electric power that is generated by a single generator is insufficient.

Fig. 4 is an explanatory diagram illustrating a case where the generators 10 are disposed above and below, and Fig. 5 is an explanatory diagram illustrating a case where the generators are installed side by side in the left-right direction.

In cases where a plurality of generators 10 are installed side by side, the respective coils are magnetically separated so that these coils 4 are not affected by the lines of magnetic force of adjacent permanent magnets 2.

In regard to this separation, the following structures (1), (2) and (3) are desirable.
(1) A structure which is sealed by a continuous body consisting of a material with a high magnetic permeability so that the device is enclosed from the outside of the generator 10, i. e., from the outside of the permanent magnet 2, guide 1 and coil 4. This is a structure in which the lines of magnetic force are selectively allowed to pass through the continuous body, and are not allowed to leak to the outside.
(2) A structure which is screened by installing screening walls between the respective coils.
   This is a structure in which screening plates comprising a diamagnetic material are installed so that the lines of magnetic force are reflected and prevented from leaking to the outside.
   Brass or a magnesium alloy, etc., is used as a diamagnetic material. The screening walls may by made entirely of a diamagnetic material, or may have a form in which the screening surfaces are covered with a coating of a diamagnetic material.
(3) A structure which is a combination of (1) and (2), i. e., a structure which is sealed by a continuous body consisting of a material with a high magnetic permeability, and in which the outside of the structure is covered with a diamagnetic material.

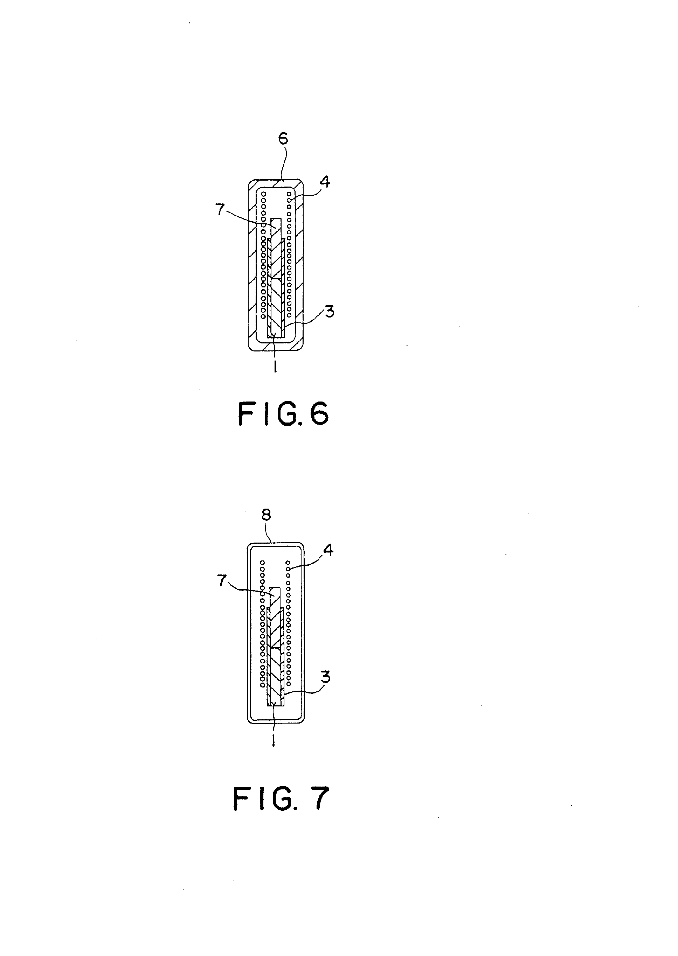

Figs. 6, 7 and 8 are explanatory diagrams of the above-described structures (1), (2) and (3).

Fig. 6 is an explanatory diagram of a structure which is surrounded by a continuous body comprising a material with a high magnetic permeability.

Fig. 7 is an explanatory diagram of a structure which is surrounded by screening walls comprising a diamagnetic material.

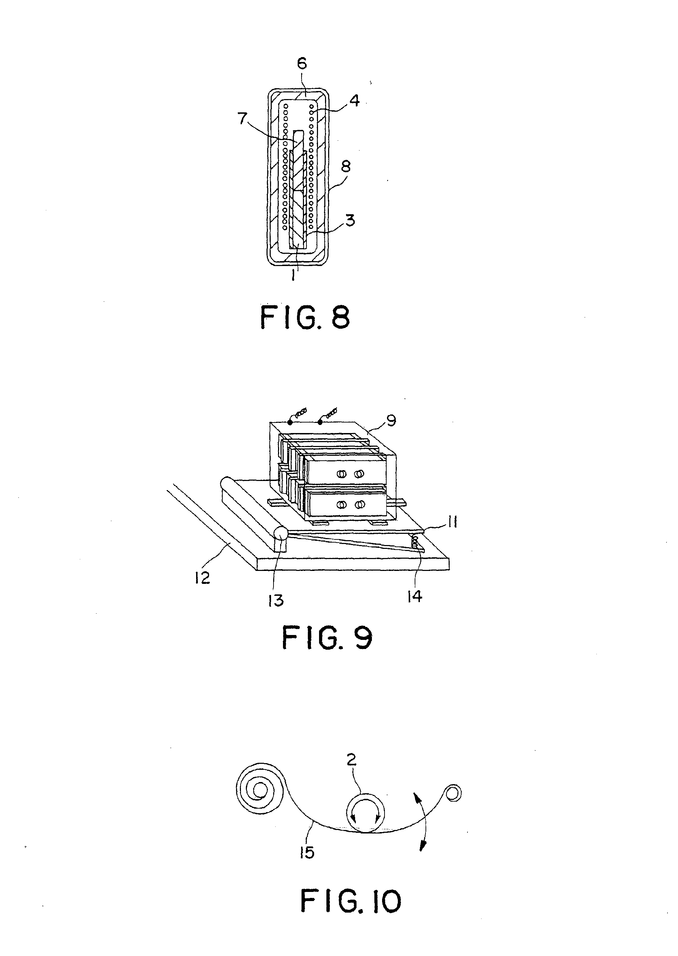

Fig. 8 is an explanatory diagram of a combined structure of the structures shown in Figs. 6 and 7.

In Fig. 6, a wheel-form permanent magnet 7 is placed on the guide 1, and side plates 3 are attached to the side surfaces 3 of the guide 1 so that this wheel does not escape from the guide 1. Coils 4 are disposed on the outsides of the side plates 3, and the outsides of the permanent magnet wheel, guide 1 and coils 4 are surrounded by a continuous body 6 comprising a material with a high magnetic permeability.

Fig. 6 shows a structure in which the magnetic flux is passed through the continuous body 6 in a concentrated manner, so that leakage to the outside is reduced.

Fig. 7 shows a structure which is surrounded by a shielding body 8 made of diamagnetic material instead of a continuous body comprising a material with a high magnetic permeability, so that the magnetic flux is reflected.

Fig. 8 shows a structure in which the outside of a continuous body 6 comprising a material with a high magnetic permeability is further surrounded by a shielding body 8 made of diamagnetic material, so that the magnetic flux is reflected.

In the present invention, any of the structures (1) through (3) may be employed, but (3) is the most desirable.

All materials that are ordinarily used in applications of this type, e. g., electromagnetic soft steel, silicon steel plates, permalloy, sendust, Fe-Al alloys, amorphous alloys and soft ferrites, etc., may be used as materials with a high magnetic permeability. Zinc, brass, magnesium and magnesium alloys, etc., may be appropriately used as diamagnetic materials.

Fig. 9 is a diagram illustrating the structure of a generator 10 which is mounted on a vehicle such as an automobile, etc. In this diagram, a configuration in which a plurality of individual generators 10 are lined up above and below and to the left and right so that numerous generators 10 are concentrated is referred to as a "power generating module 9".

The generator 10 of the present invention basically generates electricity as a result of a permanent magnet being caused to roll by vibration in the left-right direction. However, during the operation of a vehicle, etc., a large vertical vibration caused by projections and indentations in the road surface is added to such a left-right vibration. In this diagram, the fastening plate 11 to which the power generating module 9 is attached moves upward and downward around a rotating shaft 13 fixed on a stand 12 as a result of vertical vibration during operation of the vehicle. As a result, left-right vibration is caused in the individual generators 10. This structure is a vertically oriented spring mechanism 14 which converts vertical vibration into left-right vibration. The spring mechanism 14 may be either a coil type or plate type spring.

Fig. 10 shows a configuration in which an elastic band-form body 15 is used as the guide 1, and the guide 1 itself is caused to vibrate, so that the permanent magnet 2 is caused to undergo a large displacement.

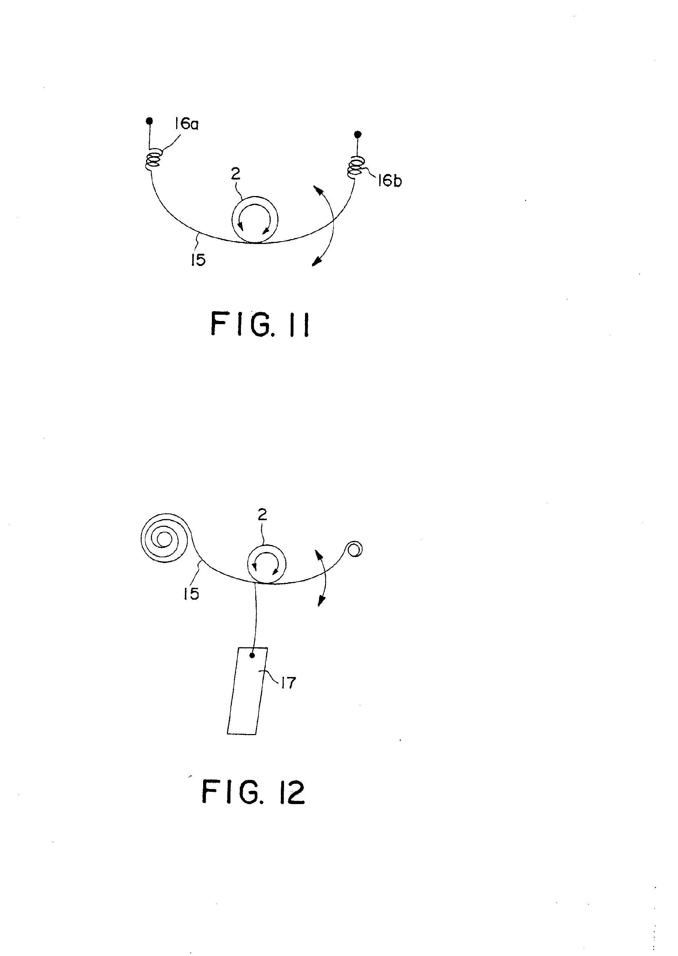

Fig. 11 shows a configuration in which a guide comprising an elastic band-form body 15 is suspended from springs 16a and 16b. Here, the permanent magnet 2 undergoes an even greater displacement, so that the generated voltage is further increased. Both of these structures are most effective in a vehicle-mounted configuration.

There are two characteristic vibration frequencies in a system comprising an elastic body and supporting springs. In other words, there are two resonance frequencies. The vibration frequencies that are generated in a human body or vehicle when a human being is walking or during the operation of a vehicle consist of a plurality of frequencies rather than a single frequency. The structures shown in Figs. 10 and 11 make it possible to construct a generator that resonates with respect to such a plurality of frequencies, so that the generating capacity can be increased.

A non-magnetic metal band may be suitably used as the material of such an elastic body.

Furthermore, if a pendulum that swings in the wind is connected to the bottom of a metal band as shown in Fig. 12, then the elastic band-form body 15 can be caused to vibrate by the movement of the wind merely by placing the device 17 in a place exposed to the wind when the device is not being carried; accordingly, the permanent magnet 2 will rotate so that electromagnetic induction occurs.

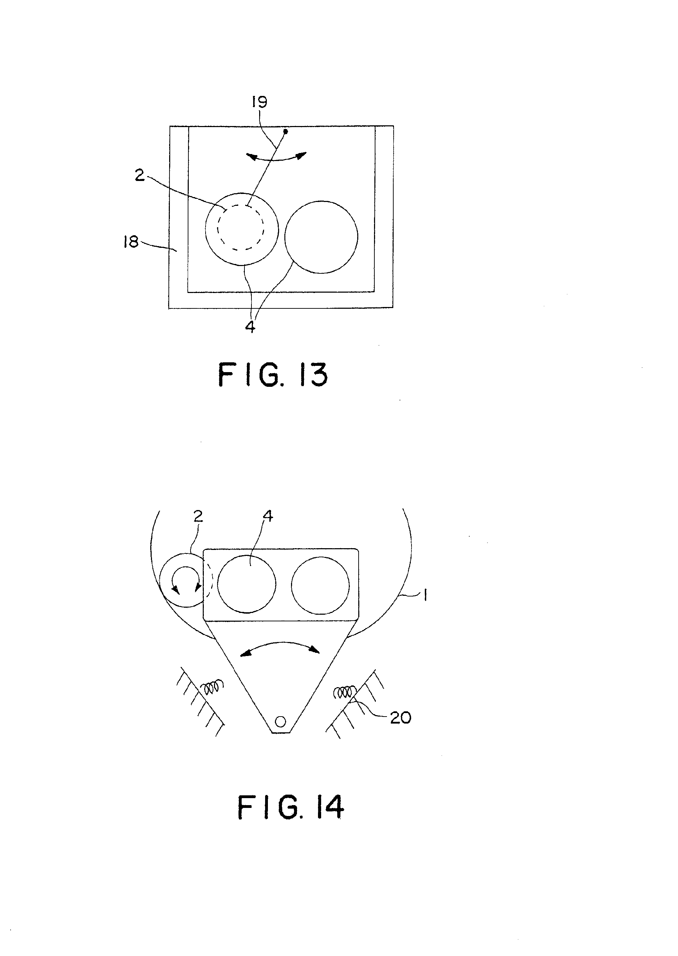

The above-described structures shown in Figs. 1 through 12 are all structures in which a permanent magnet 2 rolls over the surface of a guide 1. However, the present invention is not limited to such a configuration. It would also be possible to use a structure in which a permanent magnet 2 is suspended and cause to swing in the manner of a clock pendulum as shown in Fig. 13, without using a guide 2.

In this case, the suspending material 19 may be either a string or a rigid body; the suspending material 19 is connected to a permanent magnet 2 so that the magnet 2 swings along the coils 4. The entire structure may be contained a carry-case 18. In order to cause the pendulum to resonate, it is desirable that the distance between the axis of rotation of the pendulum and the center of gravity of the permanent magnet, i. e., the length of the pendulum, be in the range of 0.5 to 100 mm. In the case of a vibration frequency of 5 to 20 Hz, a pendulum length of 0.5 to 10 mm is sufficient.

Furthermore, the coils are fixed in Figs. 1 through 13; however, it would also be possible to cause the coils to swing. Alternatively, both the coils and permanent magnet may be caused to swing.

Fig. 14 shows one such embodiment of a case in which the coils 4 are caused to swing; here, the coils 4 are held by coil holders, and the coil holders are caused to swing to the left and right. The holders are caused to swing to the left and right by the reaction force of springs that also act as stoppers.

Here, if the magnet 2 is also caused to roll or swing in the manner of a pendulum, the relative displacement between the magnet and the coils can be amplified, so that a larger electric power can be generated in some cases.

The present invention can be directly utilized as a power supply for a portable or vehicle-mounted electronic device, or can be utilized only to charge batteries. Alternatively, present invention can be simultaneously utilized both as a direct power supply and for charging batteries.

The generator of the present invention can generate electricity utilizing vibration or swinging that is generated during walking, or vibration or swinging that is generated when the generator is mounted on a means of transportation such as a vehicle, railroad car or ship, etc. The present invention is not limited in any way to a specified vibration source or swinging source; any source that generates at least vibration or swinging can be used in the present invention.

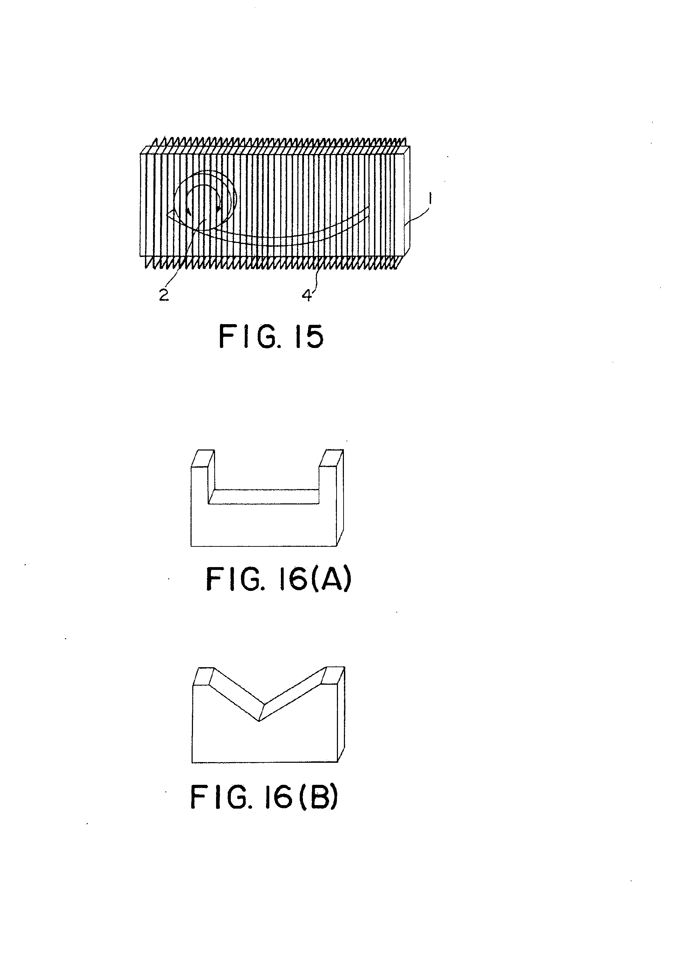

The coils used in the present invention may be any known types without restriction, ranging from winding type coils to sheet-form coils. Furthermore, in regard to the direction of winding, any direction of winding as long as the coils are wound so that the coils are in positions that cut across the magnetic flux, ranging from coils that are wound in sheet form on the left and right of the guide to coils that are wound so that guide, permanent magnet and coils are surrounded from the outside, as is shown in Fig. 15, is included in the present invention.

The permanent magnet 2 used may be a magnet manufactured by any manufacturing method, such as a cast magnet, sintered magnet or magnet in which permanent magnet particles are fixed in plastic, etc.

As is shown in Figs. 16 (A) and (B), there are no restrictions on the direction of magnetization; this direction of magnetization may be N, S in the direction of thickness of the disk, N, S in the direction of diameter of the disk, four poles on both sides of the disk, two poles on one side of the disk, multiple poles on one side of the disk, multiple poles on the outer circumference of the disk, N, S in the direction of thickness of the ring, N, S in the direction of diameter of the ring, two poles on the inner circumference of the ring, or multiple poles on the inner circumference of the ring, etc.

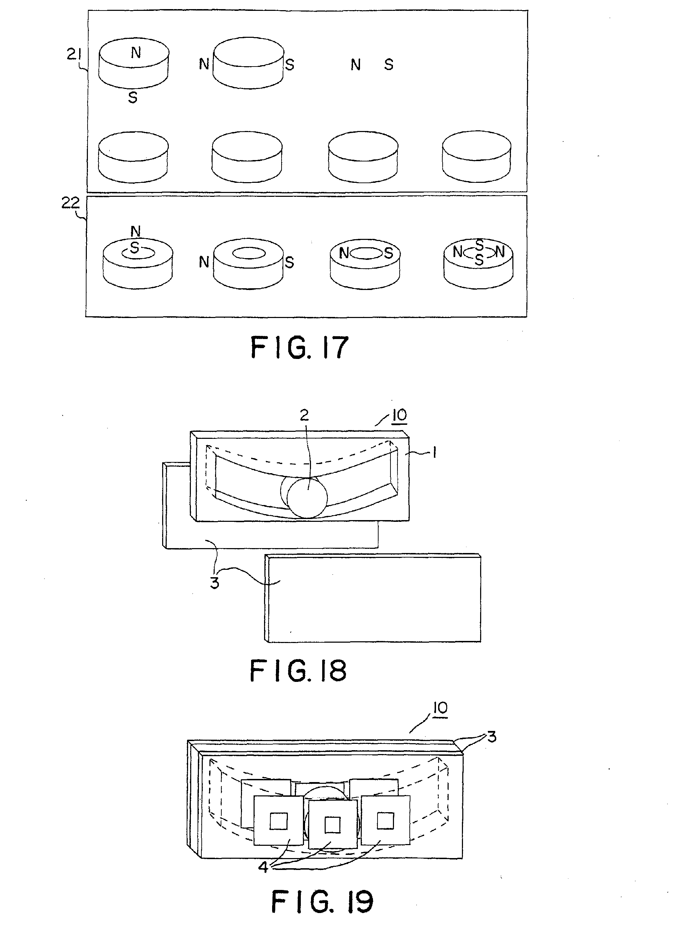

In regard to the shape of the permanent magnet, magnets ranging from disk-form magnets 21 to ring-form magnets 22 may be used as shown in Fig. 17.

A first embodiment of the generator 10 of the present invention is shown in Figs. 18 and 19. According to these embodiments, the inside surface 5 of an acrylic guide plate with a thickness of 5 mm was bored out as shown in Fig. 18, and a cylindrical permanent magnet 2 (neodymium magnet) with a radius of 9 mm and a thickness of 4.9 mm was placed on the rolling surface of the bored-out portion, and fixed by being clamped from both ends by side plates 3. The cylindrical permanent magnet 2 was able to roll freely in the left-right direction over the rolling surface.

The radius of the bored-out rolling surface was 66.3 mm, and the length of the rolling surface was 100 mm.

Next, as is shown in Fig. 19, three coils 4 wound in a square configuration were pasted to the front side plate and back side plate. In this case, since an electromotive force of opposite phase was generated in the adjacent coils, the coils 4 were alternately wound in opposite directions.

In regard to the direction of magnetization of the permanent magnet, this was set as NS in the direction of the cylinder. The coils 4 used were coils in which enamel-coated copper wires with a wire diameter of 0.1 mm were wound 2,000 times. The respective coils 4 were connected so that the induced voltages did not cancel each other. Rectification and stepping up of the voltage were accomplished by connecting the coils 4 to a rectifier and compact voltage-raising chopper, and the device was used to charge a battery.

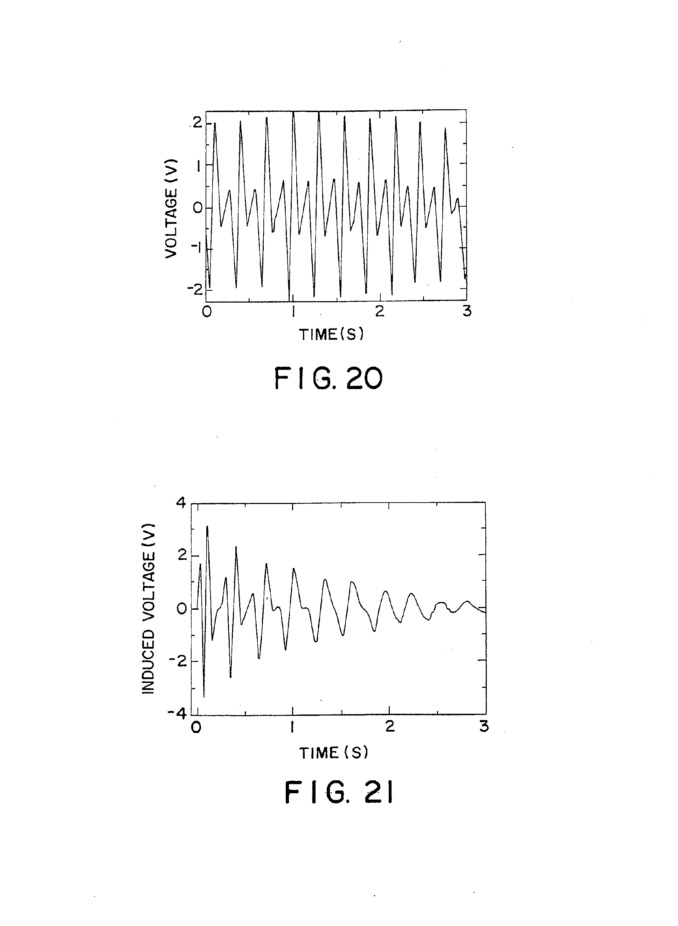

The voltage that was generated when a vibration with a frequency of 1.7 Hz and amplitude of 2.5 mm (peak to peak) was applied to the vibration operated generator shown in Fig. 19 is shown in Fig. 20.

The vertical axis indicates the generated voltage, and the horizontal axis indicates time (seconds). The mean voltage was 0.8 V. This voltage was stepped up by connection to a compact voltage-raising chopper, and was rectified into a direct current so that battery charging was possible.

Fig. 21 is a graph which shows the conditions of attenuation of the generated voltage when the permanent magnet was released at the end of the guide and allowed to vibrate freely.

A second embodiment as shown in Fig. 9 is described with more details. The vibration operated generator 10 of the first embodiment was accommodated in a case made of steel plates with a thickness of 1 mm; 100 of these assemblies were lined up and fastened to the module fastening plate shown in Fig. 9, and this construction was mounted in an automobile and subjected to a generation test. The mean value of the generated voltage was 76 V.

A third embodiment with a portable generator is described hereinbelow with more details. In this embodiment, the generator 10 with the structure shown in Fig. 1 was used. A guide part with a concave surface 5 with radius of 55 mm in which the width of this concave surface 5 was 9 mm and the length of the concave surface was 100 mm was manufactured as a prototype from an acrylic resin, and acrylic side plates with a thickness of 1 mm were bonded to both sides of the concave surface.

A disk-form permanent magnet 2 with a diameter of 18 mm and a thickness of 8 mm was mounted in a groove in the above-described guide part; the direction of magnetization was N, S in the direction of thickness.

Six coils consisting of a copper wire with a copper wire diameter of φ 0.2 mm, an external diameter of 9 mm and a winding number of 100 windings were manufactured as prototypes. Three coils 4 were closely lined up on both ends of the side plates of the guide 1, and were fastened in place by means of an adhesive agent. The coils 4 were connected so that the induced voltages would not cancel each other, rectification and stepping up of the voltage were performed using a compact voltage-raising chopper, and the generator 10 was used to charge a battery. The generating performance of this generator during walking with the generator attached to the waist of the walker was investigated.

The generator was attached to the body of a walker so that the direction of rolling of the magnet and the direction of advance of the walker coincided. An 8 Ω electrical resistor was attached to the generator, and the consumed electric power was investigated. The mean voltage was 0.34 V. This voltage was stepped up, and the current was rectified to a direct current, so that charging was possible. The mean electric power was 6.5 mW.

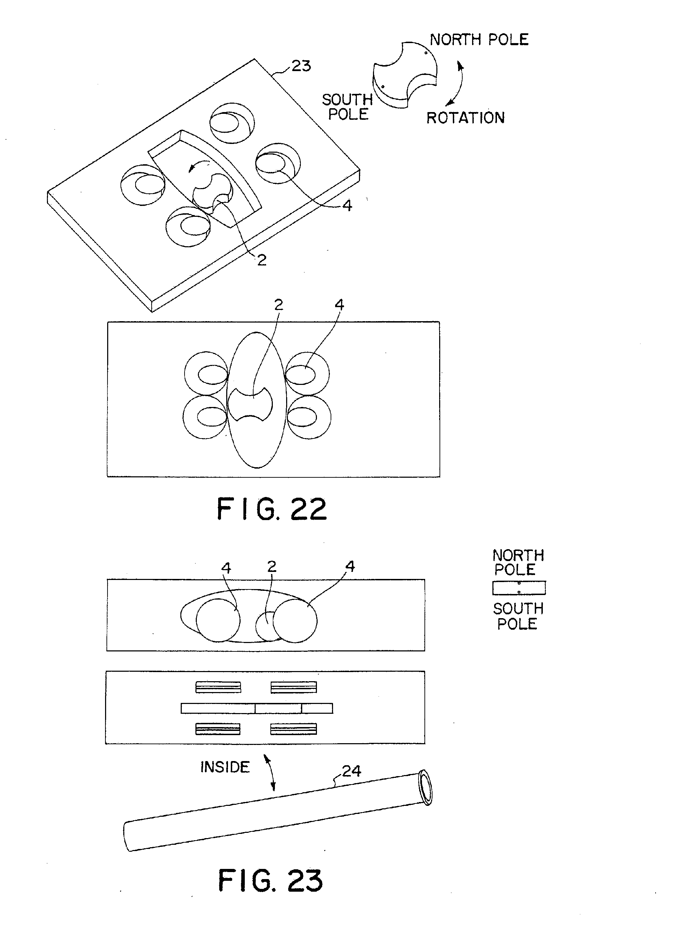

Fig. 22 shows a card type embodiment of the generator of the present invention. The generator 10 may be provided in a form of a card 23, where a permanent magnet 2 moves along a concave surface 5 of a guide 1 surrounded by coils 4 in the card 23.

Fig. 23 shows a bar type embodiment of the generator of the present invention. The generator 10 may be provided in a form of a bar 24, where a permanent magnet 2 moves along a concave surface 5 of a guide 1 surrounded by coils 4 in the bar 24.

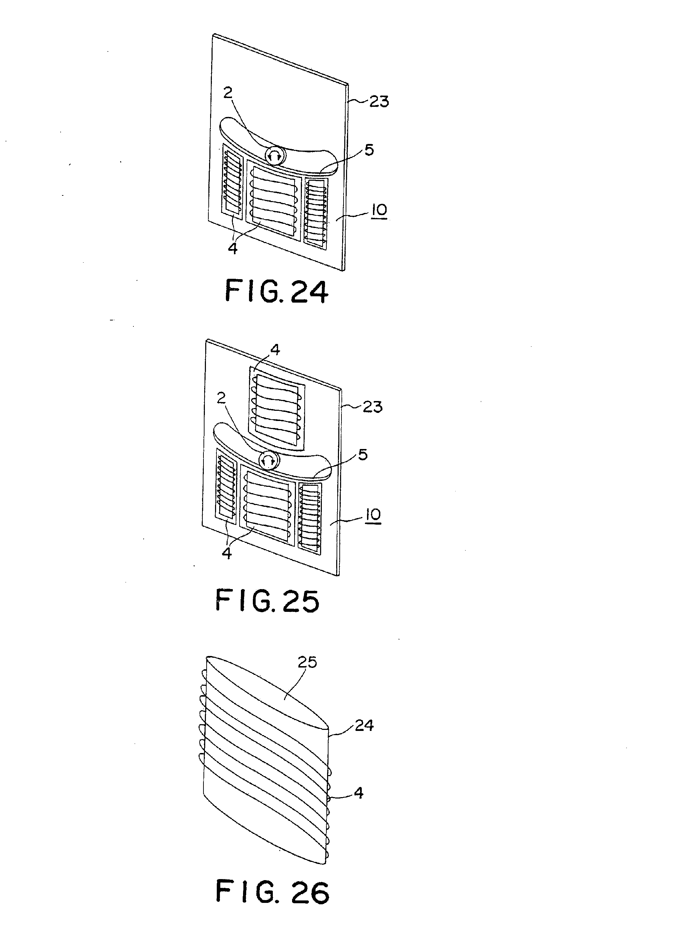

Figs. 24 and 25 show still another car type embodiment of the present invention. The vibration operated generator 10 of the present invention may be contained in a form of a card 23. This card type generator 10 comprises a permanent magnet 2 being slidable along a concave surface 5 of a guide, where a plurality of coils 4 are disposed on sides of the magnet 2.

Fig. 26 shows an embodiment of the coil 4 to be used for the card type generator 10 shown in Fig. 24 and Fig. 25. The coil 4 is wound around a bobbin 24 with an opening 25.

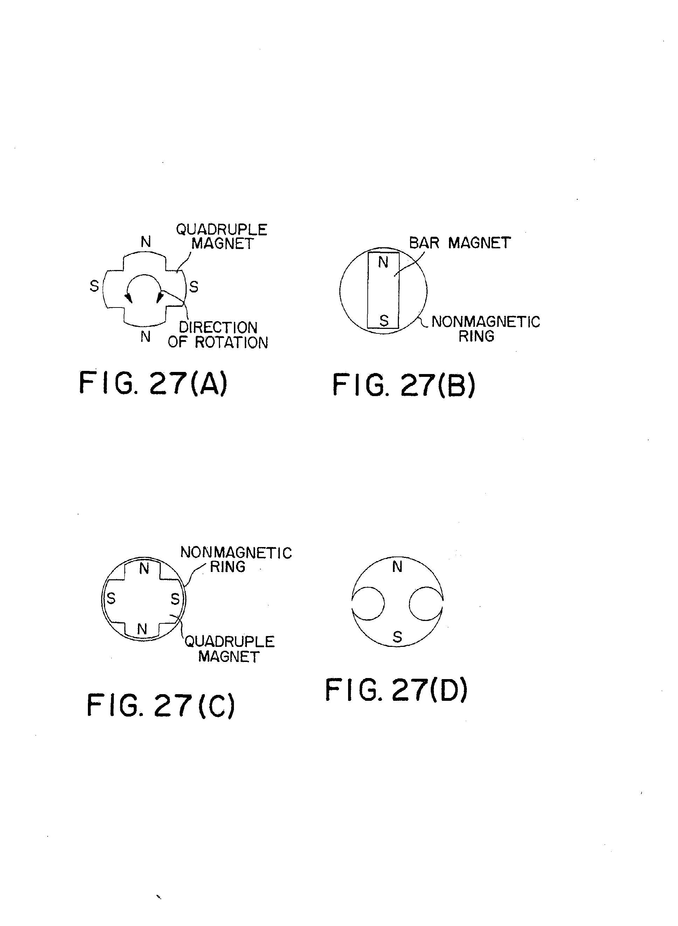

Figs. 27 (A)-(D) show embodiments of the permanent magnet of the present invention, where four different configurations of the magnet which can be used for the present invention.

As was described in the above, the present invention has an extremely simple structure, and is thin, small, light, simple and convenient in terms of portability and reliability. Furthermore, a large voltage can be obtained by combining a plurality of these generators and mounting the resulting assembly on a vehicle. Accordingly, the present invention makes a great contribution to the portability of electronic devices and communications devices. Furthermore, electricity can be generated by mounting the generator of the present invention on vehicles, railroad, cars or ships, and utilizing the vibration generated in such means of transportation, so that energy can be effectively utilized, thus making a contribution to the conservation of energy.

## Claims

1. A vibration operated generator comprising:
a guide that has a concave surface including a non-magnetic material,
a permanent magnet being placed on said concave surface of said guide in such a manner as being able to roll over said concave surface, and
electromagnetic induction coils which are disposed in positions that cut across magnetic flux of said permanent magnet.

2. A vibration operated generator according to Claim 1, wherein said guide has a ring shape.

3. A vibration operated generator according to Claim 1, wherein said guide comprises a spring.

4. A vibration operated generator according to Claim 1, wherein a vibrating spring is attached to said guide.

5. A vibration operated generator according to Claim 1, wherein said generator is contained in a card.

6. A vibration operated generator according to Claim 1, wherein said generator is contained in a bar.

7. A vibration operated generator according Claim 1, wherein a plurality of said generators are installed side by side and shielding walls that block magnetic lines of force are disposed between adjacent generators.

8. A vibration operated generator according to Claim 7, wherein said plurality of generators are formed into a module.

9. A vibration operated generator according to Claim 7, wherein said shielding walls comprising a diamagnetic material.

10. A vibration operated generator according to any of Claims 1 to 9, wherein said generators are surrounded by a body comprising a material with a high magnetic permeability.

11. A vibration operated generator according to any of Claims 1 to 9, wherein said generators are surrounded by a body comprising a material with high magnetic permeability and a shielding body.

12. A vibration operated generator according to any of Claims 1 to 9, wherein said material with a high magnetic permeability is a material selected from the group consisting of permalloy, sendust, electromagnetic soft iron, silicon steel plates, amorphous alloys and soft magnetic ferrites.

13. A vibration operated generator according to any of Claims 1 to 9, wherein said coils are connected in series or parallel with the polarity of said coils matched after induced currents of respective coils are converted into direct current.

14. A vibration operated generator comprising:
a means for suspending a permanent magnet, said means being attached to a case,
said permanent magnet being attached to the tip of said means such that the magnet is caused to swing as said case is vibrated, and
electromagnetic induction coils which are disposed in positions that cut across magnetic flux of said permanent magnet.

15. A vibration operated generator according to Claim 10, wherein said means comprises a pendulum.
